# EUROPEAN PATENT APPLICATION

(11) **EP 4 796 811 A1**
(43) Date of publication of application: **26.08.2026**
(21) Application number: 25159074.1
(22) Date of filing: 20.02.2025
(51) Int. Cl.: F16H 48/10

(54) **GEARING FOR A VEHICLE**

(71) Applicant: ZF Friedrichshafen AG, 88046 Friedrichshafen (DE)
(72) Inventor: Xu, Wenyuan, Shanghai, 201615 (CN); Song, Lei, Shanghai, 201615 (CN); Liu, Song, Shanghai, 201615 (CN); Du, Wendi, Shanghai, 201615 (CN)
(74) Representative: WBH Wachenhausen Patentanwälte PartG mbB

(57) **Abstract**

The invention relates to a gearing (10) for a vehicle (1). The gearing (10) comprises a first planetary gear set (70), a second planetary gear set (80), an input shaft (4) for receiving power from a driving unit (7) for driving the vehicle, a first output shaft (5), a second output shaft (6) and an installation space (20) for the driving unit (7). The first planetary gear set (70) and the second planetary gear set (80) are operatively connected. The input shaft (4) and the first output shaft (5) are operatively connected to the first planetary gear set (70). The second output shaft (6) is operatively connected to the second planetary gear set (80). The installation space (20) is arranged between the first planetary gear set (70) and the second planetary gear set (80) in an axial direction (90) of the gearing (10).

## Description

### Technical Field

The present disclosure refers to a gearing for a vehicle. The present disclosure also relates to a driving axle with such a gearing, and to a vehicle with such a gearing or such a driving axle.

### Prior art

Gearings for vehicles are known. In some cases, the gearing may comprise two planetary gear sets for converting an input rotational speed into a lower rotational speed and for providing a differential function to drive elements operatively connected to the gearing. In some cases, the gearing may be provided axially adjacent to a driving unit for driving the vehicle. In such cases, an available space for the planetary gear sets between the driving unit and the drive elements in an axial direction of the gearing may be limited.

### Summary of the invention

The present disclosure relates in a first aspect to a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may be provided for converting an input value, for example a torque and/or a rotational speed, into an output value. For example, the gearing may be provided to convert an input torque and an input rotational speed into a higher output torque and a lower output rotational speed in accordance with a reduction ratio of the gearing. The gearing may be provided as a distribution gearing for distributing power between two output shafts. The gearing may also comprise a differential function. The drive element may be, for example, a wheel for contacting the ground or a drive wheel or sprocket for tracks. The vehicle may comprise a shiftable transmission disposed in a power flow between the driving unit and the drive element.

The gearing comprises a first planetary gear set and a second planetary gear set. Each planetary gear set may comprise multiple planetary gear elements. Examples for the planetary gear elements may include a sun gear, a planetary carrier and a ring gear. The planetary carrier may comprise at least one of a planet pin, a planet bearing and a planet gear. The first planetary gear set and the second planetary gear set may be configured identically or differently from each other. Further details concerning the planetary gear sets are provided further in the following.

The gearing comprises an input shaft for receiving power from a driving unit for driving the vehicle. The driving unit may be a driving unit of the vehicle as described above. The driving unit may be provided together with the gearing so as to form a driving axle. An axial direction of the driving axle, for example of the gearing, may correspond to a transverse direction of the vehicle. A drive element may be provided on each axial end of the driving axle. The driving unit may be arranged between two drive elements with respect to the axial direction. For example, the driving unit may be arranged near or at an axially middle portion of the driving axle. For example, the driving unit may be centered on a middle longitudinal axis of the vehicle or slightly offset with respect thereto.

The gearing further comprises a first output shaft and a second output shaft. Each output shaft of the gearing may be operatively connected to a drive element of the vehicle. If two elements are operatively connected, the elements are directly or indirectly coupled to each other so that a movement of one element causes a reaction of the other element. An operative connection can be established, for example, by frictional engagement or geometric fit. The operative connection can correspond to a meshing between corresponding gears of the two elements. Further elements, such as shafts, constant velocity joints and/or one or more gear sets, may be present between the elements.

One element of the first planetary gear set is operatively connected to one element of the second planetary gear set. Accordingly, power can be transferred between the first and second planetary gear sets. The input shaft and the first output shaft are operatively connected to the first planetary gear set. The first planetary gear set may be configured to receive power by means of the first input shaft and to output power by means of the first output shaft. The second output shaft is operatively connected to the second planetary gear set. The second planetary gear set may be configured to output power by means of the second output shaft. The gearing may be configured to receive power from the input shaft and to distribute the received power between the first output shaft and the second output shaft.

The gearing comprises an installation space for the driving unit. The installation space is arranged between the first planetary gear set and the second planetary gear set in an axial direction of the gearing. The axial direction of the gearing may relate to an axial direction of one or both planetary gear sets. In one example, the first planetary gear set and the second planetary gear set may be coaxial to each other. At least some of the input shaft, the first output shaft and the second output shaft may be arranged coaxially. The installation space may be formed as a hollow volume, in which the driving unit can be accommodated. For example, the installation space may be provided as an annular volume arranged coaxially to a middle axis of the gearing. The middle axis of the gearing may be a common axis of the planetary gear sets. In another example, the installation space may be offset with respect to the middle axis. The installation space may have a dimension along the axial direction sufficient for accommodating the driving unit. The installation space may be sandwiched between the first planetary gear set and the second planetary gear set. One of the output shafts may extend at least partly through the installation space. For example, the input shaft and one output shaft may be arranged on one axial side of the installation space, and the other output shaft may be arranged on the other axial side of the installation space. Alternatively or additionally, an element for operatively connecting the first planetary gear set and the second planetary gear set may extend at least partly through the installation space.

The installation space may be provided in a housing portion. The housing portion may be part of a housing. The housing may be provided as one or several casings for enclosing stationary and/or rotational components of the gearing and/or the driving unit. The housing may also be configured as a stationary member for providing support and for receiving forces and torques. The housing may comprise several detachable housing portions. Each housing portion may be configured to accommodate and support different components. For example, the housing may comprise one or more gearing housing portions for enclosing and rotatably supporting parts of the gearing. For example, one gearing housing portion may accommodate the first planetary gear set and another gearing housing portion may accommodate the second planetary gear set. For example, the housing may comprise a driving unit housing portion for enclosing and rotatably supporting the driving unit. The driving unit housing portion may provide the installation space for the driving unit. The driving unit housing portion may be arranged between the first gearing housing portion and the second gearing housing portion in the axial direction. The exemplary housing portions may be mounted to each other or formed integrally with each other.

With the gearing according to first aspect, the planetary gear sets of the gearing may be provided on both axial sides of the installation space for the driving unit. Thereby, a split gearing is provided, in which only one gear set is to be arranged between the installation space for the driving unit and each of the drive elements. Accordingly, less axial space is necessary on each side of the driving unit between the driving unit and the respective drive element compared to a case, in which both planetary gear sets are arranged on the same axial side of the driving unit. Thus, a compact configuration in the axial direction is achieved.

In an embodiment, the gearing comprises an intermediate shaft operatively connecting the one element of the first planetary gear set with the one element of the second planetary gear set. The intermediate shaft may be non-rotatably connected to the one element of the first planetary gear set and the one element of the second planetary gear set. The intermediate shaft may be arranged coaxially with respect to the input shaft. The intermediate shaft may extend at least partly through the input shaft. Thereby, operative connection between the first planetary gear set and the second planetary gear set is provided in a simple manner. The one element of each planetary gear set may be any one of the elements of the respective planetary gear set. In one example, the one element of the first planetary gear set may be formed as a ring gear, and the one element of the second planetary gear set may be formed as a sun gear. The input shaft may be at least partly formed as a hollow shaft, through which at least part of the intermediate shaft may be configured to extend. The intermediate shaft may extend through the installation space. In case the installation space is formed with an annular shape, the intermediate shaft may extend through a center portion of the annular installation space. The input shaft may be provided in a manner not extending through the installation space. Since a lower torque is to be transferred between the planetary gear sets compared to a torque output by either of the planetary gear sets via the respective output shaft, the intermediate shaft can be provided with a smaller diameter than the diameter of each output shaft. Thereby, the diameter of the input shaft can also be reduced.

In an embodiment, the first planetary gear set comprises at least a first element, a second element and a third element. The second planetary gear set may comprise at least a first element, a second element and a third element. Each of the first, second and third elements of each planetary gear sets may be provided as described above, for example as a sun gear, a planetary carrier or a ring gear. In the present embodiment, the third element of the first planetary gear set is formed as the one element of the first planetary gear set and the first element of the second planetary gear set is formed as the one element of the second planetary gear set. In other words, the operative connection between the first planetary gear set and the second planetary gear set is provided by an operative connection of the third element of the first planetary gear set with the first element of the second planetary gear set. Thereby, a gearing with two planetary gear sets is provided with a simple configuration.

In an embodiment, the input shaft is non-rotatably connected to the first element of the first planetary gear set. The second element of the first planetary gear set may be non-rotatably connected to the first output shaft. The second element of the second planetary gear set may be non-rotatably connected to a stationary member. The stationary member may be provided by the housing described above, for example. The third element of the second planetary gear set may be non-rotatably connected to the second output shaft. Thereby, a gearing with a differential function for allowing relative rotation between the first output shaft and the second output shaft while distributing power between the two output shafts is provided with a simple configuration.

In an embodiment, each first element of the planetary gear sets is a sun gear, each second element of the planetary gear sets is a planetary carrier and each third element of the planetary gear sets is a ring gear. Thereby, a gearing with two planetary gear sets is provided with a simple configuration.

In an embodiment, at least one of the planetary gear sets comprises a stepped planet with two torque proofly connected planet gears having different diameters. The two planet gears may be provided monolithically or may be connected by a torque transfer element, for example a shaft. Each planet gear may comprise engaging elements, for example teeth, for engaging, for example meshing, with a further element of the respective planetary gear set. One planet gear may be configured to mesh with the first element of the respective planetary gear set. The other planet gear may be configured to mesh with the third element of the respective planetary gear set. The engaging elements of one of the planet gears may be configured the same or differently than the engaging elements of the other planet gear. The stepped planet comprising the planet gears may be rotatably supported by the planetary carrier of the respective planetary gear set. The stepped planet may serve as a planet gear of the planetary gear set. By means of the planetary gears of the stepped planet having different diameters, an additional reduction ratio may be provided by the stepped planet.

In a second aspect, the present disclosure relates to a driving axle for a vehicle. The driving axle comprises a gearing according to the first aspect. The driving axle of the second aspect further comprises a driving unit for driving the input shaft of the gearing. The driving unit may be provided in the installation space. The driving unit and the installation space may be configured as described above with respect to the first aspect. The respective advantages and further features can be taken from the description of the first aspect, wherein embodiments of the first aspect also form embodiments of the second aspect and vice versa.

In an embodiment, an outer diameter of each of the planetary gear sets is not larger than an outer diameter of the driving unit. The outer diameter of the planetary gear set may refer to an outer diameter of its ring gear. The outer diameter of the driving unit may refer to an outer diameter of an element of the driving unit. For example, in case the driving unit comprises a stator and a rotor arranged coaxially to the stator, the outer diameter may refer to the larger of the outer diameters of the stator and the rotor. In one example, the stator may be arranged radially outside the rotor, such that the outer diameter of the driving unit may refer to the outer diameter of the stator. By means of the present embodiment, a driving axle is provided with a compact configuration with respect to a radial direction of the driving axle.

In an embodiment, the driving axle comprises a housing for accommodating the driving unit. The housing may be configured as a stationary member for the gearing. The housing may be provided as described above with respect to the first aspect.

In a third aspect, the present disclosure relates to a vehicle. The vehicle comprises a gearing according to the first aspect or a driving axle according to the second aspect. The respective advantages and further features can be taken from the description of the first or second aspect, wherein embodiments of the first or second aspect also form embodiments of the third aspect and vice versa.

### Brief description of drawings

Figure 1 shows a vehicle with a gearing according to an embodiment of the present disclosure.
Figure 2 schematically shows a general layout of a gearing for the vehicle of Figure 1 according to an embodiment of the present disclosure.
Figure 3 schematically shows a gearing with the layout of Figure 2 according to an embodiment of the present disclosure.
Figure 4 schematically shows a gearing with the layout of Figure 2 according to an embodiment of the present disclosure.
Figure 5 schematically shows a gearing with the layout of Figure 2 according to an embodiment of the present disclosure.
Figure 6 schematically shows a gearing with the layout of Figure 2 according to an embodiment of the present disclosure.

### Detailed description of embodiments

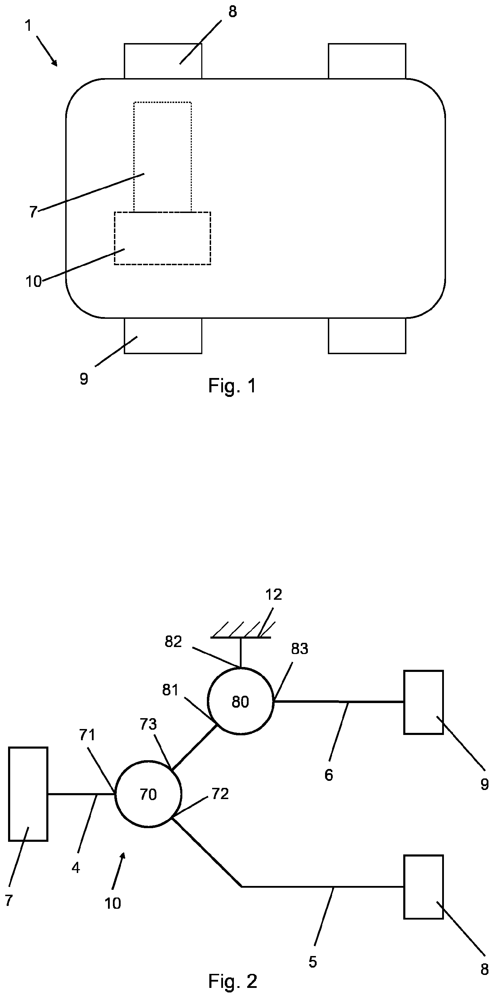

Figure 1 shows a vehicle 1 with a gearing 10 according to an embodiment of the present disclosure. The vehicle 1 comprises a driving unit 7 presently formed as an electric motor. The gearing 10 is configured for transferring power input by the driving unit 7 to at least two drive elements 8, 9 presently formed as wheels.

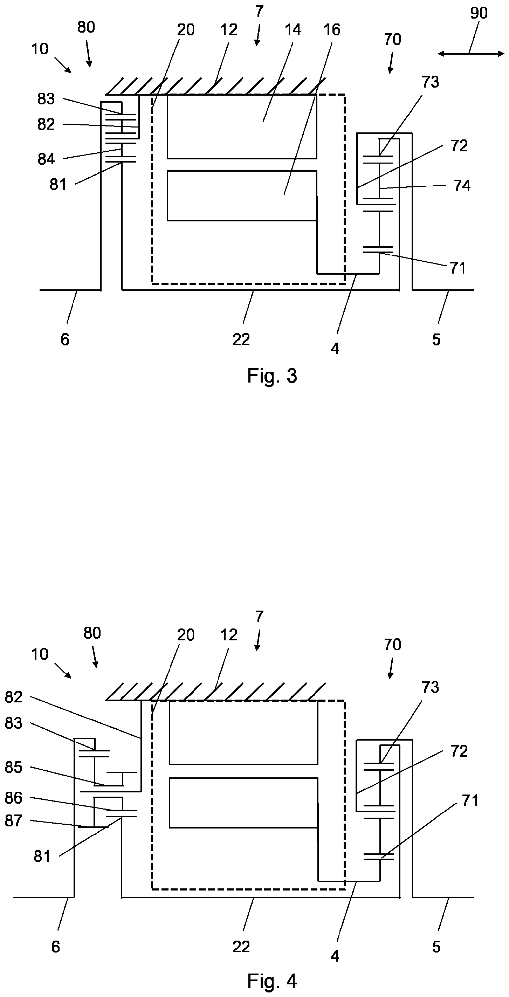

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by a driving unit 7 can be introduced into the gearing 10 via an input shaft 4. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by means of an intermediate shaft described further in the following with reference to Figure 3. The second element 82 of the second planetary gear set 80 is permanently non-rotatably fixed to a stationary member 12. A first output shaft 5 is mechanically operatively connected to the second element 72 of the first planetary gear set 70, in this case permanently non-rotatably connected, for outputting power to a first drive element 8. A second output shaft 6 is mechanically operatively connected to the third element 83 of the second planetary gear set 80, in this case permanently non-rotatably connected, for outputting power to a second drive element 9.

Figure 3 shows a gearing 10 according to an embodiment of the present disclosure. The gearing 10 of the present embodiment is provided according to the general layout shown in Figure 2. In the present embodiment, the first planetary gear set 70 and the second planetary gear set 80 are offset along an axial direction 90. In the present embodiment, each of the first elements 71, 81 is formed as a sun gear, each of the second elements 72, 82 is formed as a planetary carrier and each of the third elements 73, 83 is formed as a ring gear. Each planetary carrier 72, 82 comprises a plurality of planet gears 74, 84 meshing with the sun gear 71, 81 and the ring gear 73, 83 of the respective planetary gear set 70, 80. The first output shaft 5 is permanently non-rotatably connected to the planetary carrier 72 of the first planetary gear set 70. The second output shaft 6 is permanently non-rotatably connected to the ring gear 83 of the second planetary gear set 80. Furthermore, the second output shaft 6 is arranged coaxially to the input shaft 4 and the first output shaft 5. The input shaft 4 receives power for driving the vehicle 1 from the driving unit 7. Presently, the driving unit 7 comprises a stator 14 supported in the stationary member 12, here a housing for accommodating and supporting the first and second planetary gear sets 70, 80 and the driving unit 7. The driving unit 7 further comprises a rotor 16 non-rotatably connected to the input shaft 4 for introducing the power for driving the vehicle 1. In the present embodiment, the stator 14 is arranged radially outside the rotor 16. In the present embodiment, an outer diameter of each of the first planetary gear set 70 and the second planetary gear set 80 is smaller than an outer diameter of the stator 14.

An installation space 20 for the driving unit 7 is formed axially between the planetary gear sets 70, 80. The installation space 20 is presently formed as a hollow space in the housing 12 accommodating the driving unit 7. The stator 14 and the rotor 16 are accommodated in the installation space 20. An intermediate shaft 22 traverses the installation space 20 in the axial direction. The intermediate shaft 22 is non-rotatably connected to the ring gear 73 of the first planetary gear set 70 on one axial side of the installation space 20. The intermediate shaft 22 is further connected to the sun gear 81 of the second planetary gear set 80 on the other axial side of the installation space 20. Furthermore, the intermediate shaft 22 is arranged coaxially to the input shaft 4.

With the present embodiment, a gearing 10 with a compact configuration in the axial direction 90 is provided by splitting the planetary gear sets 70, 80 and providing them on both axial sides of the installation space 20 for accommodating the driving unit 7.

Figure 4 shows a gearing 10 according to an embodiment of the present disclosure. The gearing 10 of Figure 4 is configured identically to the gearing 10 of Figure 3 except for the following difference. While the gearing 10 of Figure 3 comprises the planet gear 84 of the second planetary gear set 80, the gearing 10 of Figure 4 comprises a stepped planet 85 of the second planetary gear set 80. The stepped planet 85 comprises a first planet gear 86 meshing with the sun gear 81 of the second planetary gear set. The stepped planet 85 further comprises a second planet gear 87 meshing with the ring gear 83 of the second planetary gear set 80. Presently, the first and second planet gears 86, 87 are formed monolithically so as to form the stepped planet 85. By means of the stepped planet 85, the second planetary gear set 80 is provided with a high reduction ratio and compact dimensions.

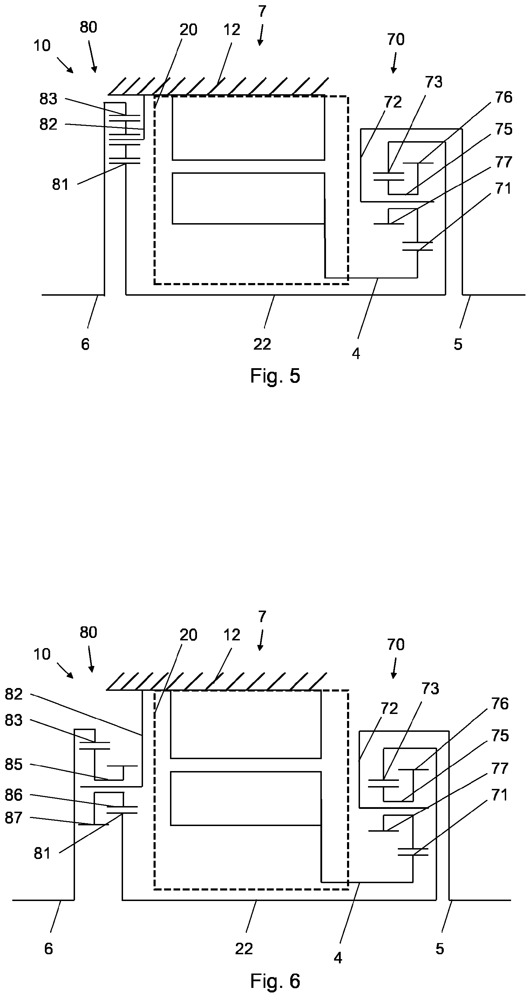

Figure 5 shows a gearing 10 according to an embodiment of the present disclosure. The gearing 10 of Figure 5 is configured identically to the gearing 10 of Figure 3 except for the following difference. While the gearing 10 of Figure 3 comprises the planet gear 74 of the first planetary gear set 70, the gearing 10 of Figure 5 comprises a stepped planet 75 of the first planetary gear set 70. The stepped planet 75 comprises a first planet gear 76 meshing with the sun gear 71 of the first planetary gear set. The stepped planet 75 further comprises a second planet gear 77 meshing with the ring gear 73 of the first planetary gear set 70. Presently, the first and second planet gears 76, 77 are formed monolithically so as to form the stepped planet 75. By means of the stepped planet 75, the first planetary gear set 70 is provided with a high reduction ratio and compact dimensions.

Figure 6 shows a gearing 10 according to an embodiment of the present disclosure. The gearing 10 of Figure 6 is configured identically to the gearing 10 of Figure 3 except for the following differences. Instead of the planet gear 74 of the first planetary gear set 70, the gearing 10 of Figure 6 comprises the stepped planet 75 of the first planetary gear set 70 configured as described above with respect to Figure 5. Furthermore, instead of the planet gear 84 of the second planetary gear set 80, the gearing 10 of Figure 6 comprises the stepped planet 85 of the second planetary gear set 80 configured as described above with respect to Figure 4. Thereby, both the first planetary gear set 70 and the second planetary gear set 80 are provided with a high reduction ratio and compact dimensions.

### Reference signs

- 1: vehicle
- 4: input shaft
- 5, 6: output shaft
- 7: driving unit
- 8, 9: drive element
- 10: gearing
- 12: stationary member
- 14: stator
- 16: rotor
- 20: installation space
- 22: intermediate shaft
- 70, 80: planetary gear set
- 71, 81: first element
- 72, 82: second element
- 73, 83: third element
- 74, 76, 77, 84, 86, 87: planet gear
- 75, 85: stepped planet
- 90: axial direction

## Claims

1. A gearing (10) for a vehicle (1), comprising a first planetary gear set (70), a second planetary gear set (80), an input shaft (4) for receiving power from a driving unit (7) for driving the vehicle (1), a first output shaft (5), a second output shaft (6) and an installation space (20) for the driving unit (7), wherein one element (73) of the first planetary gear set (70) is operatively connected to one element (81) of the second planetary gear set (80), the input shaft (4) and the first output shaft (5) are operatively connected to the first planetary gear set (70), the second output shaft (6) is operatively connected to the second planetary gear set (80), and the installation space (20) is arranged between the first planetary gear set (70) and the second planetary gear set (80) in an axial direction (90) of the gearing (10).

2. The gearing (10) according to claim 1, **characterized by** comprising an intermediate shaft (22) operatively connecting the one element (73) of the first planetary gear set (70) with the one element (81) of the second planetary gear set (80), the intermediate shaft (22) being arranged coaxially with respect to the input shaft (4) and extending at least partly through the input shaft (4).

3. The gearing (10) according to claim 1 or 2, **characterized in that** the first planetary gear set (70) comprises at least a first element (71), a second element (72) and a third element (73) and the second planetary gear set (80) comprises at least a first element (81), a second element (82) and a third element (83), wherein the third element (73) of the first planetary gear set (70) is formed as the one element (73) of the first planetary gear set (70) and the first element (81) of the second planetary gear set (80) is formed as the one element (81) of the second planetary gear set (80).

4. The gearing (10) according to claim 3, **characterized in that** the input shaft (4) is non-rotatably connected to the first element (71) of the first planetary gear set (70), the second element (72) of the first planetary gear set (70) is non-rotatably connected to the first output shaft (5), the second element (82) of the second planetary gear set (80) is non-rotatably connected to a stationary member (12) and the third element (83) of the second planetary gear set (80) is non-rotatably connected to the second output shaft (6).

5. The gearing (10) according to claim 3 or 4, **characterized in that** each first element (71, 81) of the planetary gear sets (70, 80) is a sun gear, each second element (72, 82) of the planetary gear sets (70, 80) is a planetary carrier and each third element (73, 83) of the planetary gear sets (70, 80) is a ring gear.

6. The gearing (10) according to any one of claims 3 to 5, **characterized in that** at least one of the planetary gear sets (70, 80) comprises a stepped planet (75; 85) with two torque proofly connected planet gears (76, 77; 86, 87) having different diameters, one planet gear (76; 86) meshing with the first element (71; 81) of the respective planetary gear set (70; 80) and the other planet gear (77; 87) meshing with the third element (73; 83) of the respective planetary gear set (70; 80).

7. A driving axle for a vehicle (1), comprising a gearing (10) according to any one of claims 1 to 6 and a driving unit (7) for driving the input shaft (4) of the gearing (10), the driving unit (7) being provided in the installation space (20).

8. The driving axle according to claim 7, **characterized in that** an outer diameter of each of the planetary gear sets (70, 80) is not larger than an outer diameter of the driving unit (7).

9. The driving axle according to claim 7 or 8, **characterized by** comprising a housing for accommodating the driving unit (7), wherein the housing is configured as a stationary member (12) for the gearing (10).

10. A vehicle (1) comprising a gearing (10) according to any one of claims 1 to 6 or a driving axle according to any one of claims 7 to 9.
